# EUROPEAN PATENT APPLICATION

(11) **EP 4 451 407 A1**
(43) Date of publication of application: **23.10.2024**
(21) Application number: 22907314.3
(22) Date of filing: 07.12.2022
(51) Int. Cl.: H01M 10/0565, H01M 4/505, H01M 4/525, H01M 10/0567, H01M 10/0568

(54) **NONAQUEOUS ELECTROLYTIC SOLUTION AND LITHIUM-ION SECONDARY BATTERY**

(30) Priority: 15.12.2021 JP 2021203701
(71) Applicant: DKS Co. Ltd., Kyoto-shi, Kyoto 600-8873 (JP)
(72) Inventor: YOSHIOKA, Takuya, kyoto-shi, Kyoto 600-8873 (JP); HOSHIHARA, Yuji, kyoto-shi, Kyoto 600-8873 (JP); MURAKAMI, Satoshi, kyoto-shi, Kyoto 600-8873 (JP); HIGASHIZAKI, Tetsuya, kyoto-shi, Kyoto 600-8873 (JP)
(74) Representative: Kuhnen & Wacker Patent- und Rechtsanwaltsbüro PartG mbB
(86) International application number: PCT/JP2022/045033
(87) International publication number: WO 2023/112787

(57) **Abstract**

A nonaqueous electrolytic solution used in a lithium ion secondary battery can provide good output characteristics and cycle characteristics and suppresses deterioration in interface resistance.

A nonaqueous electrolytic solution according to an embodiment is a nonaqueous electrolytic solution including a supporting salt, an aprotic solvent, a copolymer represented by general formula (1) and having a weight-average molecular weight of 200,000 or more and 600,000 or less, and vinylene carbonate, but not including 4-fluoro-1,3-dioxolan-2-one. The content of the copolymer is 0.5 to 2.5 mass% relative to the total amount of the supporting salt, the aprotic solvent, and the copolymer. The content of the vinylene carbonate is 0.5 to 2.5 mass% relative to the total amount of the supporting salt, the aprotic solvent, and the copolymer.

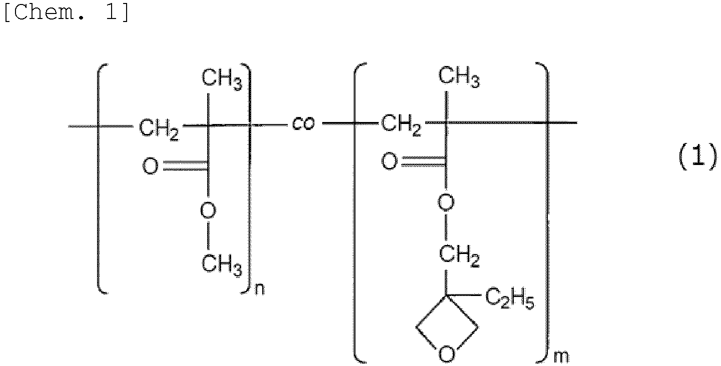

## Description

### Technical Field

Embodiments of the present invention relate to a nonaqueous electrolytic solution and a lithium ion secondary battery including the nonaqueous electrolytic solution.

### Background Art

Lithium ion secondary batteries are required to have improved battery characteristics such as output characteristics and cycle characteristics.

For example, PTL 1 discloses that cycle characteristics are improved by adding a cyclic sulfonic acid compound to a polymer gel electrolyte containing a cross-linked polymer formed by cross-linking a methacrylic acid ester polymerization product obtained by copolymerizing methyl methacrylate and (3-ethyloxetan-3-yl)methyl methacrylate.

PTL 2 discloses that cycle characteristics are improved by adding vinylene carbonate and 4-fluoro-1,3-dioxolan-2-one to a nonaqueous electrolytic solution containing a methacrylic acid ester polymerization product obtained by copolymerizing methyl methacrylate and (3-ethyloxetan-3-yl)methyl methacrylate.

### Citation List

### Patent Literature

PTL 1: International Publication No. 2011/004483
PTL 2: Japanese Unexamined Patent Application Publication No. 2016-72119

### Summary of Invention

### Technical Problem

Although the use of a nonaqueous electrolytic solution containing a methacrylic acid ester polymerization product obtained by copolymerizing methyl methacrylate and (3-ethyloxetan-3-yl)methyl methacrylate in a lithium ion secondary battery is known as described above, but further improvement in output characteristics and cycle characteristics is required.

In PTL 2, improved cycle characteristics are achieved by adding both vinylene carbonate and 4-fluoro-1,3-dioxolan-2-one to the nonaqueous electrolytic solution containing a methacrylic acid ester polymerization product. However, the studies by the present inventors have revealed that the addition of both vinylene carbonate and 4-fluoro-1,3-dioxolan-2-one increases the resistance at a nonaqueous electrolyte-electrode interface (interface resistance).

In view of the foregoing, an object of embodiments of the present invention is to provide a nonaqueous electrolytic solution that can provide good output characteristics and cycle characteristics and can suppress deterioration in interface resistance, and a lithium ion secondary battery including the nonaqueous electrolytic solution.

### Solution to Problem

The present invention includes embodiments given below.
[1] A nonaqueous electrolytic solution including a supporting salt, an aprotic solvent, a copolymer represented by general formula (1) below and having a weight-average molecular weight of 200,000 or more and 600,000 or less, and vinylene carbonate, but not including 4-fluoro-1,3-dioxolan-2-one, 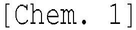 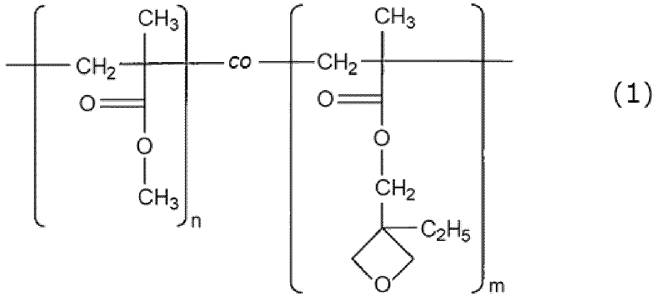
   wherein in formula (1), m and n are each a number of 1 or greater, and m/n satisfies 0.12 or more and 0.33 or less,
   a content of the copolymer is 0.5 to 2.5 mass% relative to a total amount of the supporting salt, the aprotic solvent, and the copolymer, and
   a content of the vinylene carbonate is 0.5 to 2.5 mass% relative to the total amount of the supporting salt, the aprotic solvent, and the copolymer.
[2] A lithium ion secondary battery including a positive electrode, a negative electrode, and a nonaqueous electrolyte obtained by cross-linking the copolymer using the nonaqueous electrolytic solution according to [1].
[3] The lithium ion secondary battery according to [2], wherein the positive electrode includes, as a positive electrode active material, a lithium-containing composite oxide containing Ni, Co, and Mn, and an amount of Ni in the lithium-containing composite oxide is 50 mol% or more relative to a total amount of Ni, Co, and Mn.
[4] The lithium ion secondary battery according to [2] or [3], wherein the lithium ion secondary battery is a laminate-type lithium ion secondary battery including an outer casing formed of a laminate film.

### Advantageous Effects of Invention

According to the embodiments of the present invention, good output characteristics and cycle characteristics can be provided, and in addition deterioration in interface resistance can be suppressed.

### Description of Embodiments

A nonaqueous electrolytic solution according to an embodiment contains a supporting salt, an aprotic solvent, a methacrylic acid ester polymerization product, and vinylene carbonate. The nonaqueous electrolytic solution is an electrolyte solution in which the supporting salt, the methacrylic acid ester polymerization product, and vinylene carbonate are dissolved in the aprotic solvent which is a nonaqueous solvent.

### [Supporting Salt]

The supporting salt is a substance that increases the conductivity of the aprotic solvent, and examples include lithium salts such as LiPF₆, LiBF₄, LiAsF₆, LiSbF₆, LiN(SO₂F)₂ (i.e., lithium bis(fluorosulfonyl)imide: LiFSI), LiAlCl₄, LiClO₄, LiCF₃SO₃, LiC₄F₉SO₃, LiC (CF₃SO₂) ₃, LiN (CF₃SO₂) ₂, LiN(C₂F₅SO₂)₂, lithium carboxylates, chloroborane lithium, lithium tetraphenylborate, LiBr, LiI, LiSCN, LiCl, and LiF. These supporting salts may be used alone or in combination of two or more.

The supporting salt preferably contains a fluorine-containing lithium salt, more preferably contains at least one material selected from the group consisting of LiPF₆, LiBF₄, LiAsF₆, LiSbF₆, and LiN (SO₂F)₂.

The concentration of the supporting salt in the nonaqueous electrolytic solution is not particularly limited, but is preferably 0.5 to 2.0 mol/L, more preferably 0.6 to 1.8 mol/L, and may be 0.8 to 1.6 mol/L.

### [Aprotic Solvent]

Examples of the aprotic solvent include cyclic carbonates such as ethylene carbonate (EC), propylene carbonate (PC), and butylene carbonate (BC); linear carbonates such as diethyl carbonate (DEC), dimethyl carbonate (DMC), ethyl methyl carbonate (EMC), and dipropyl carbonate (DPC); aliphatic carboxylic acid esters such as methyl formate, methyl acetate, and ethyl propionate; γ-lactones such as γ-butyrolactone; linear ethers such as 1,2-diethoxyethane (DEE) and ethoxymethoxyethane (EME); cyclic ethers such as tetrahydrofuran (THF) and 2-methyltetrahydrofuran; fluorine derivatives thereof; dimethylsulfoxide (DMSO), 1,3-dioxolane, formamide, acetamide, dimethylformamide (DMF), acetonitrile, propylnitrile, nitromethane, phosphoric acid triesters, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propane sultone, anisole, N-methylpyrrolidone, and fluorinated carboxylic acid esters. These aprotic organic solvents may be used alone or in combination of two or more.

The aprotic solvent preferably includes at least one solvent selected from the group consisting of cyclic carbonates, linear carbonates, aliphatic carboxylic acid esters, γ-lactones, cyclic ethers, and linear ethers. The aprotic solvent more preferably includes at least one selected from the group consisting of cyclic carbonates and linear carbonates. In one embodiment, the aprotic solvent may include at least one selected from the group consisting of EC, PC, BC, DEC, DMC, EMC, and DPC, or may include at least one selected from the group consisting of EC, PC, and BC and at least one selected from the group consisting of DEC, DMC, EMC, and DPC.

### [Methacrylic Acid Ester Polymerization Product]

The methacrylic acid ester polymerization product used in this embodiment is a copolymer represented by general formula (1) below.

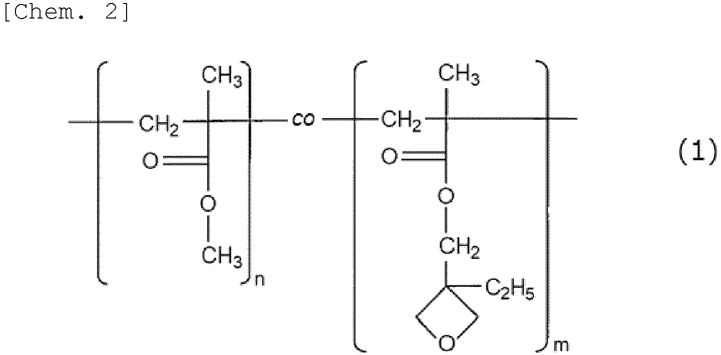

The methacrylic acid ester polymerization product is a copolymer of methyl methacrylate (MMA) and (3-ethyloxetan-3-yl)methyl methacrylate (OXMA), and may be a random copolymer or a block copolymer.

The weight-average molecular weight (Mw) of the methacrylic acid ester polymerization product is preferably 200,000 to 600,000, more preferably 300,000 to 550,000, and may be 400,000 to 500,000. The number-average molecular weight (Mn) of the methacrylic acid ester polymerization product is not particularly limited, and may be, for example, 50,000 to 200,000, 80,000 to 180,000, or 100,000 to 150,000.

In formula (1), n represents the number (the degree of polymerization) of constitutional units derived from methyl methacrylate (hereinafter referred to as MMA units), and is a number of 1 or greater. In formula (1), m represents the number (the degree of polymerization) of constitutional units derived from (3-ethyloxetan-3-yl)methyl methacrylate (hereinafter referred to as OXMA units), and is a number of 1 or greater. The ratio m/n of m, the number of OXMA units, to n, the number of MMA units, preferably satisfies 0.12 to 0.33, more preferably satisfies 0.15 to 0.25. As long as the weight-average molecular weight and m/n satisfy the above ranges, m and n are not particularly limited; for example, n may be 500 to 1800, and m may be 40 to 600.

Here, the weight-average molecular weight Mw and the number-average molecular weight Mn of the methacrylic acid ester polymerization product are measured by gel permeation chromatography (GPC) in terms of polystyrene. m/n is the content molar ratio (m/n) between the OXMA unit and the MMA unit determined by ¹H-NMR measurement. n and m are calculated from the number-average molecular weight Mn of the methacrylic acid ester polymerization product and the ratio m/n. Thus, n and m represent average values and are not always integers.

The methacrylic acid ester polymerization product preferably consists essentially of the MMA unit and the OXMA unit as constitutional units derived from monomers, but may include constitutional units derived from other monomers as long as the effects are not impaired. Although not particularly limited, the total content of the MMA unit and the OXMA unit relative to 100 mol% of all constitutional units derived from monomers is preferably 90 mol% or more, more preferably 95 mol% or more, still more preferably 99 mol% or more, and may be 100 mol%.

The methacrylic acid ester polymerization product can be obtained by radical copolymerization of methyl methacrylate (MMA) and (3-ethyloxetan-3-yl)methyl methacrylate (OXMA).

The content of the methacrylic acid ester polymerization product in the nonaqueous electrolytic solution is 0.5 to 2.5 mass% relative to the total amount of the supporting salt, the aprotic solvent, and the methacrylic acid ester polymerization product. When this content is 0.5 mass% or more, output characteristics and cycle characteristics can be improved. When this content is 2.5 mass% or less, output characteristics can be improved. The content of the methacrylic acid ester polymerization product is more preferably 0.5 to 2.0 mass%, still more preferably 0.5 to 1.5 mass%.

### [Vinylene Carbonate]

In the nonaqueous electrolytic solution according to this embodiment, vinylene carbonate is incorporated. By adding vinylene carbonate to the nonaqueous electrolytic solution in which the above specific amount of the methacrylic acid ester polymerization product together with the supporting salt is incorporated in the aprotic solvent, output characteristics can be specifically improved, and furthermore cycle characteristics can also be improved.

The content of the vinylene carbonate in the nonaqueous electrolytic solution is 0.5 to 2.5 mass% relative to the total amount of the supporting salt, the aprotic solvent, and the methacrylic acid ester polymerization product. When this content is 0.5 mass% or more, output characteristics and cycle characteristics can be improved. When this content is 2.5 mass% or less, deterioration in interface resistance can be suppressed. The content of the vinylene carbonate is more preferably 1.0 to 2.5 mass%, still more preferably 1.5 to 2.0 mass%.

### [Other Components]

The nonaqueous electrolytic solution according to this embodiment does not contain 4-fluoro-1,3-dioxolan-2-one (FEC). This addition of vinylene carbonate without addition of 4-fluoro-1,3-dioxolan-2-one can suppress an increase in resistance at a nonaqueous electrolyte-electrode interface while improving output characteristics and cycle characteristics.

In addition to the above-described components, additives such as acid anhydrides, sulfonic acid esters, diphenyl disulfide, cyclohexylbenzene, biphenyl, fluorobenzene, and t-butylbenzene may appropriately be added to the nonaqueous electrolytic solution according to this embodiment.

### [Lithium Ion Secondary Battery]

A lithium ion secondary battery according to an embodiment includes a positive electrode, a negative electrode, and a nonaqueous electrolyte obtained by cross-linking a methacrylic acid ester polymerization product (i.e., a copolymer represented by general formula (1)) using the above nonaqueous electrolytic solution.

The nonaqueous electrolyte contains a supporting salt, an aprotic solvent, and a cross-linked polymer formed by cross-linking a methacrylic acid ester polymerization product. The cross-linked polymer is obtained by causing, using a cationic polymerization initiator, oxetanyl groups of the methacrylic acid ester polymerization product to undergo ring-opening polymerization. The cationic polymerization initiator may be a commonly known polymerization initiator, but it is preferable to utilize a lithium salt contained as the supporting salt in the nonaqueous electrolytic solution and trace amounts of acidic materials resulting from hydrolysis of anionic components of the lithium salt, because characteristics imparted to the battery are minor.

The nonaqueous electrolyte may be in liquid form or gel form. In one embodiment, when the above content of the methacrylic acid ester polymerization product in the nonaqueous electrolytic solution is about 1.5 mass% or less, the nonaqueous electrolytic solution remains liquid after the above cross-linking, and thus a nonaqueous electrolyte in liquid form is provided. On the other hand, when the above content of the methacrylic acid ester polymerization product in the nonaqueous electrolytic solution is about 2.0 mass% or more, the nonaqueous electrolytic solution gelatinizes as a result of the above cross-linking, and a nonaqueous electrolyte in gel form is provided. The gel form here includes not only a normal gel but also a state similar to that of an electrolyte referred to as a gel electrolyte in the battery industry, and even includes a gel not in the strict sense, such as a state in which the liquid has little or no fluidity or the liquid does not flow.

The concentration of the supporting salt in the nonaqueous electrolyte is the same as the concentration of the supporting salt in the nonaqueous electrolytic solution described above. The content of the cross-linked polymer of the methacrylic acid ester polymerization product in the nonaqueous electrolyte is the same as the content of the methacrylic acid ester polymerization product in the nonaqueous electrolytic solution described above. The content of the vinylene carbonate in the nonaqueous electrolyte is the same as the content of the vinylene carbonate in the nonaqueous electrolytic solution described above.

The positive electrode includes at least a positive electrode active material, and may be, for example, a positive electrode consisting of a metal current collector such as aluminum foil and a positive electrode mixture layer formed on one or both surfaces of the current collector, the positive electrode mixture layer containing the positive electrode active material.

The positive electrode mixture layer can be formed by application of a positive electrode mixture-containing paste to the current collector, drying, and compression molding. The positive electrode mixture-containing paste can be obtained by dispersing the positive electrode active material in a dispersion medium such as N-methyl-2-pyrrolidone (NMP) together with a conductive aid such as carbon black or graphite and a binder such as polyvinylidene fluoride (PVDF) and mixing them.

The positive electrode active material is not particularly limited, and, for example, lithium-containing composite oxides such as LiCoO₂, LiNiO₂, and LiMn₂O₄ can be used. Alternatively, lithium-containing composite oxides derived by replacing the transition metal moieties of the foregoing lithium-containing composite oxides with other elements can also be used. These may be used alone or in combination of two or more.

In one embodiment, the positive electrode may include, as the positive electrode active material, a lithium-containing composite oxide containing Ni (nickel), Co (cobalt), and Mn (manganese). Preferably, the amount of Ni in the lithium-containing composite oxide is 50 mol% or more relative to the total amount of Ni, Co, and Mn. In general, although the theoretical capacity increases as the amount of Ni increases, the actual output characteristics are low so that the performance is not readily exhibited, but the use of the nonaqueous electrolyte according to this embodiment can achieve higher output characteristics. The amount of Ni in the lithium-containing composite oxide is more preferably 70 to 90 mol%, still more preferably 75 to 85 mol%, relative to the total amount of Ni, Co, and Mn.

In one embodiment, the lithium-containing composite oxide may be a compound represented as LiₓNiₐC_{Ob}Mn_{c}O₂, where x is 0.5 to 1.2, a is 0.5 to 0.9 (preferably 0.7 to 0.9, more preferably 0.75 to 0.85), b satisfies b > 0 (preferably 0.05 to 0.2), and c satisfies c > 0 (preferably 0.05 to 0.2), provided that a + b + c = 1.

The negative electrode includes at least a negative electrode active material, and may be, for example, a negative electrode consisting of a metal current collector such as copper foil and a negative electrode mixture layer formed on one or both surfaces of the current collector, the negative electrode mixture layer containing the negative electrode active material.

The negative electrode mixture layer can be formed by, for example, application of a negative electrode mixture-containing paste to the current collector, drying, and compression molding. The negative electrode mixture-containing paste can be obtained by dispersing the negative electrode active material in a dispersion medium such as water together with a binder such as styrene-butadiene rubber and mixing them. The negative electrode mixture-containing paste may further contain a thickener such as a carboxymethylcellulose salt and a conductive aid such as carbon black. The negative electrode mixture layer may be formed by a method such as vapor deposition, CVD, or sputtering.

The negative electrode active material is not particularly limited, and as well as lithium metal or a lithium alloy, one or more substances selected from materials capable of occluding and releasing lithium can be used. Specific examples of materials capable of occluding and releasing lithium include carbon materials and oxides.

The lithium alloy is composed of lithium and a metal that can be alloyed with lithium. Specific examples include binary, ternary, and higher alloys of lithium and metals such as Al, Si, Pb, Sn, In, Bi, Ag, Ba, Ca, Hg, Pd, Pt, Te, Zn, and La.

Examples of carbon materials include graphite, amorphous carbon, diamond-like carbon, carbon nanotubes, and composite oxides thereof. In particular, graphite or amorphous carbon is preferred.

Examples of oxides that can be used include silicon oxide, tin oxide, indium oxide, zinc oxide, lithium oxide, and composites thereof. In particular, silicon oxide is preferred because it is stable and does not react with other compounds.

The lithium ion secondary battery may be produced by any method known in the art. For example, the positive electrode and the negative electrode are stacked with a separator interposed therebetween to form a stacked body. Alternatively, the positive electrode and the negative electrode are flatly wound with a separator interposed therebetween and then formed into a wound body. The stacked body or the wound body is then inserted into an outer casing such as a can or a laminate material, after which the nonaqueous electrolytic solution is injected into the outer casing to cross-link the methacrylic acid ester polymerization product, whereby the lithium ion secondary battery is obtained.

The methacrylic acid ester polymerization product is cross-linked by, for example, the injection of the nonaqueous electrolytic solution, followed by charging and heating. As a result of this, the methacrylic acid ester polymerization product can be cross-linked using a lithium salt contained in the nonaqueous electrolytic solution and trace amounts of acidic materials resulting from hydrolysis of anionic components of the lithium salt. Depending on the content of the methacrylic acid ester polymerization product, the nonaqueous electrolytic solution gelatinizes as described above to form a polymer gel electrolyte.

The separator may be a separator commonly used in a lithium ion secondary battery, such as a nonwoven fabric or a polyolefin microporous membrane. The separator is not essential, and the nonaqueous electrolyte may function as a separator.

In one embodiment, the lithium ion secondary battery may be a laminate-type lithium ion secondary battery including an outer casing formed of a laminate film.

According to this embodiment, in the nonaqueous electrolytic solution in which the above specific amount of the methacrylic acid ester polymerization product together with the supporting salt is incorporated in the aprotic solvent, a specific amount of vinylene carbonate is incorporated without adding 4-fluoro-1,3-dioxolan-2-one, whereby output characteristics and cycle characteristics can be improved, while deterioration in interface resistance can be suppressed. Thus, a lithium ion secondary battery having good output characteristics and cycle characteristics and having low interface resistance can be provided.

### EXAMPLES

The present invention will now be described more specifically with reference to Examples, but it should be noted that the present invention is not limited to the following Examples.

### [Measurement and Analysis Methods]

### (Mw and Mn of Methacrylic Acid Ester Polymerization Product)

A methacrylic acid ester polymerization product was dissolved in tetrahydrofuran, and its weight-average molecular weight (Mw) and number-average molecular weight (Mn) in terms of polystyrene were measured by gel permeation chromatography (GPC) (Prominence, manufactured by Shimadzu Corporation) using four connected columns (Shodex GPC columns KF-601, KF-602, KF-603, and KF-604, manufactured by Showa Denko K.K.) filled with polystyrene gel. A differential refractive index detector (Shodex RI-504, manufactured by Showa Denko K.K.) was used under the following conditions: column oven temperature, 40°C; THF flow rate, 0.6 mL/min; sample concentration, 0.1 mass%; sample injection volume, 100 µL.

### (m/n of Methacrylic Acid Ester Polymerization Product)

A methacrylic acid ester polymerization product was dissolved in deuterated chloroform and subjected to ¹H-NMR measurement using a nuclear magnetic resonance apparatus (manufactured by JEOL Ltd.) to determine the content molar ratio (m/n) between the OXMA unit and the MMA unit.

### (Interface Resistance)

For batteries obtained in Examples and Comparative Examples, their interface resistance was estimated. Using an impedance analyzer (product name: SP-150) manufactured by Bio-Logic SAS, an electrochemical impedance (EIS) was measured at 25°C and a frequency of 1 MHz to 0.1 Hz. The value of interface resistance was obtained from the diameter of a semicircular arc component in the impedance plot obtained.

### (Output Characteristics)

To evaluate output characteristics, in an atmosphere at 25°C, CC-CV (constant current-constant voltage) charging was performed at the 0.5C current value, after which CC discharging was performed at the 2C current value, and the capacity retention (the ratio relative to the discharge capacity in CC discharging at the 0.2C current value: 2C discharge capacity/0.2C discharge capacity) was calculated. The voltage range in charging and discharging was set to be from 2.7 V to 4.2 V. The 2C current value refers to a current value that is twice the 1C current value, at which the cell capacity can be discharged in one hour. The 0.2C current value refers to a current value that is 0.2 times the 1C current value, at which the cell capacity can be discharged in one hour.

### (Cycle Characteristics)

To evaluate cycle characteristics, in an atmosphere at 25°C, a repeating cycle of CC-CV (constant voltage) charging at the 0.3C current value and CC discharging at the 0.3C current value was performed 200 times and 300 times, and the capacity retention (the retention relative to the discharge capacity in the first cycle) (%) was calculated. The voltage range in charging and discharging was set to be from 2.7 V to 4.2 V.

### [Synthesis Example 1 (Synthesis of Methacrylic Acid Ester Polymerization Product)]

In a 3000 mL separable flask sufficiently dried, 165.0 g of methyl methacrylate, 55.2 g of (3-ethyl-3-oxetanyl)methyl methacrylate, and 880.8 g of ethylene carbonate were added, and after the mixture was stirred for 90 minutes while being bubbled with nitrogen at 70°C, a solution obtained by dissolving 0.364 g of 2,2'-azobis(isobutyronitrile) (AIBN) in 3.27 g of diethyl carbonate was added to initiate the reaction. Furthermore, at 3 hours and 6 hours after the start of the reaction, a solution obtained by dissolving 0.108 g of AIBN in 0.972 g of diethyl carbonate was added, and after heating with stirring was continued for a total of 9 hours, the resulting solution was diluted with 28.8 g of ethylene carbonate and 1618.5 g of diethyl carbonate. This solution was dried with a molecular sieve to obtain a methacrylic acid ester polymerization product represented by general formula (1) as an 8 mass% solution.

The methacrylic acid ester polymerization product obtained was a random copolymer of MMA and OXMA, with weight-average molecular weight Mw = 480,000, number-average molecular weight Mn = 132,000, m/n = 0.19.

### [Example 1]

In a glove box filled with dry nitrogen gas, predetermined amounts of the 8 mass% solution of the methacrylic acid ester polymerization product obtained in Synthesis Example 1, lithium hexafluorophosphate, and ethylene carbonate/diethyl carbonate (3/7, volume ratio) were mixed and dissolved to prepare a solution such that, in the solution, the concentration of lithium hexafluorophosphate was 1 mol/L and the concentration of the methacrylic acid ester polymerization product was 0.5 mass%. To 100 mass% of the solution obtained, 2.0 mass% of vinylene carbonate was added to obtain a nonaqueous electrolytic solution of Example 1.

### [Examples 2 and 3]

Nonaqueous electrolytic solutions of Examples 2 and 3 were obtained in the same manner as in Example 1 except that the concentration of the methacrylic acid ester polymerization product was changed so as to be 1.5 mass% in Example 2 and 2.0 mass% in Example 3.

### [Example 4]

A nonaqueous electrolytic solution of Example 4 was obtained in the same manner as in Example 1 except that the concentration of the methacrylic acid ester polymerization product was changed so as to be 2.0 mass% and the amount of vinylene carbonate added after the preparation of a solution was 1.0 mass%.

### [Comparative Examples 1 to 6]

Nonaqueous electrolytic solutions of Comparative Examples 1 to 6 were obtained in the same manner as in Example 1 except that the concentration of the methacrylic acid ester polymerization product in preparing a solution and the amount of vinylene carbonate added after the preparation of the solution were changed as shown in Table 1 below.

### [Comparative Example 7]

A nonaqueous electrolytic solution of Comparative Example 7 was obtained in the same manner as in Example 3 except that after the preparation of a solution, 2.0 mass% of 4-fluoro-1,3-dioxolan-2-one (FEC), together with 2.0 mass% of vinylene carbonate, was added to 100 mass% of the solution.

### [Fabrication and Evaluation of Lithium Ion Secondary Battery]

### (Fabrication of Positive Electrode)

Ninety-nine parts by mass of a positive electrode active material composed of Li₁.₀Ni₀.₈Co₀.₁Mn₀.₁O₂ and 30 parts by mass of an NMP solution containing PVDF serving as a binder at a concentration of 1 mass% were kneaded using a twin-screw kneader, and NMP was further added to adjust the viscosity, thereby preparing a positive electrode mixture-containing paste.

The positive electrode mixture-containing paste obtained was applied to both surfaces of 15 um thick aluminum foil (positive electrode current collector) and then vacuum-dried at 130°C for 8 hours to form a positive electrode mixture layer on both the surfaces of the aluminum foil. Thereafter, pressing was performed to adjust the thickness and density of the positive electrode mixture layer, and a nickel lead was welded to an exposed portion of the aluminum foil to fabricate a strip-shaped positive electrode having a length of 60 mm and a width of 30 mm. In the positive electrode obtained, the thickness of the positive electrode mixture layer on each side was 59 um.

### (Fabrication of Negative Electrode)

To 96 parts by mass of graphite serving as a negative electrode active material and having an average particle size D50 of 15 um, 2.5 parts by mass of styrene-butadiene rubber (SBR) serving as a binder, and 1.5 parts by mass of carboxymethylcellulose sodium salt (CMC) serving as a thickener, water was added and mixed together to prepare a negative electrode mixture-containing paste.

The negative electrode mixture-containing paste obtained was applied to both surfaces of 8 um thick copper foil (negative electrode current collector) and then vacuum-dried at 130°C for 8 hours to form a negative electrode mixture layer on both the surfaces of the copper foil. Thereafter, pressing was performed to adjust the thickness and density of the negative electrode mixture layer, and a nickel lead was welded to an exposed portion of the copper foil to fabricate a strip-shaped negative electrode having a length of 62 mm and a width of 32 mm. In the negative electrode obtained, the thickness of the negative electrode mixture layer on each side was 95 um.

### (Assembly of Battery)

The positive electrode and the negative electrode obtained above were stacked on top of each other with a polyolefin monolayer separator as a separator interposed therebetween, and a positive electrode terminal and a negative electrode terminal were ultrasonically welded to the positive electrode and the negative electrode, respectively. The stack was placed in an aluminum laminate package, and the package was heat-sealed except for an opening for electrolytic solution injection to fabricate a battery before electrolytic solution injection with a positive electrode area of 18 cm² and a negative electrode area of 19.8 cm².

The nonaqueous electrolytic solutions of Examples 1 to 4 and Comparative Examples 1 to 7 were each injected through the opening for injection of the obtained battery before injection, and the opening was sealed. The resultants were charged to 4.2 V at 0.2C and then heated at 60°C for 20 hours in a constant temperature bath to obtain lithium ion secondary batteries.

Among the lithium ion secondary batteries obtained, in the batteries obtained by injecting the nonaqueous electrolytic solutions of Examples 1 and 2 and Comparative Examples 1, 2, and 4, the nonaqueous electrolytes were not in gel form but in liquid form. On the other hand, in the batteries obtained by injecting the nonaqueous electrolytic solutions of Examples 3 and 4 and Comparative Examples 3 and 5 to 7, the nonaqueous electrolytes were in gel form.

**[Table 1]**

| | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|
| Methacrylic acid ester polymerization product concentration (mass%) | 0.5 | 1.5 | 2.0 | 2.0 | 0 | 0.5 | 2.0 | 0 | 2.0 | 3.0 | 2.0 |
| Amount of vinylene carbonate added (mass%) | 2.0 | 2.0 | 2.0 | 1.0 | 0 | 0 | 0 | 2.0 | 3.0 | 2.0 | 2.0 |
| Amount of FEC added (mass%) | 0 | 0 | 0 | 0 | 0 | 0 | 0 | 0 | 0 | 0 | 2.0 |
| Interface resistance (mΩ) | 48 | 55 | 45 | 43 | 41 | 40 | 46 | 51 | 63 | 54 | 66 |
| Output characteristics: 2C discharge capacity/0.2C discharge capacity | 0.60 | 0.54 | 0.48 | 0.52 | 0.38 | 0.32 | 0.19 | 0.43 | 0.52 | 0.43 | 0.53 |
| Cycle characteristics: capacity retention: 200 cycles (%) | 97 | 97 | 96 | 95 | 92 | 89 | 87 | 94 | 96 | 96 | 96 |
| Cycle characteristics: capacity retention: 300 cycles (%) | 95 | 95 | 94 | 93 | 90 | 87 | 82 | 91 | 93 | 93 | 94 |
| Cycle characteristics: capacity retention: 400 cycles (%) | 95 | 94 | 93 | 91 | 89 | 85 | 78 | 90 | 92 | 91 | 93 |

As shown in Table 1, in Comparative Example 1, in which the methacrylic acid ester polymerization product and vinylene carbonate were not incorporated, 2C discharge capacity/0.2C discharge capacity indicating output characteristics was less than 0.45, showing that the output characteristics were poor. In Comparative Examples 2 and 3, in each of which the methacrylic acid ester polymerization product was incorporated unlike in Comparative Example 1, the output characteristics were further lower, and in addition the capacity retention indicating cycle characteristics was 90% or less, showing that the cycle characteristics were poor. In Comparative Example 4, in which vinylene carbonate was added unlike in Comparative Example 1, the output characteristics were improved, but insufficiently.

By contrast, in Examples 1 to 4, in which the methacrylic acid ester polymerization product and vinylene carbonate were incorporated, the output characteristics were significantly higher than in Comparative Examples 1 to 4, and the cycle characteristics were also improved. In addition, the interface resistance was less than 60 mQ in each of Examples 1 to 4, meaning that deterioration in interface resistance was suppressed.

In Comparative Example 5, since the amount of vinylene carbonate added was large, the interface resistance deteriorated to 60 mQ or more. In Comparative Example 6, since the content of the methacrylic acid ester polymerization product was high, the improvement in output characteristics was poor. In Comparative Example 7, in which FEC was added together with the methacrylic acid ester polymerization product and vinylene carbonate, the output characteristics and the cycle characteristics were excellent, but the interface resistance deteriorated to 60 mQ or more.

As described above, it is found that when the nonaqueous electrolytic solution contains the methacrylic acid ester polymerization product in an amount of 0.5 to 2.5 mass% and vinylene carbonate is externally added in an amount of 0.5 to 2.5 mass%, the output characteristics are improved, and the cycle characteristics can also be improved compared to when one or both of the methacrylic acid ester polymerization product and vinylene carbonate are not contained. In addition, it is found that deterioration in interface resistance can be suppressed compared to when FEC is added together with the methacrylic acid ester polymerization product and vinylene carbonate.

Note that the upper limit values and lower limit values of various numerical ranges mentioned herein may be used in any combination, and it should be appreciated that all such combinations are described herein as preferred numerical ranges. A numerical range expressed as "X to Y" means X or more and Y or less.

Although some embodiments of the present invention have been described above, these embodiments are given by way of example and are not intended to limit the scope of the invention. These embodiments can be practiced in various other forms, and various omissions, substitutions, and changes can be made without departing from the spirit of the invention. These embodiments and omissions, substitutions, changes, and the like made thereto come within the scope and spirit of the invention and also similarly come within the scope of the invention set forth in the claims and equivalents thereof.

## Claims

1. A nonaqueous electrolytic solution comprising:
a supporting salt;
an aprotic solvent;
a copolymer represented by general formula (1) below and having a weight-average molecular weight of 200,000 or more and 600,000 or less; and
vinylene carbonate,
but not comprising 4-fluoro-1,3-dioxolan-2-one, 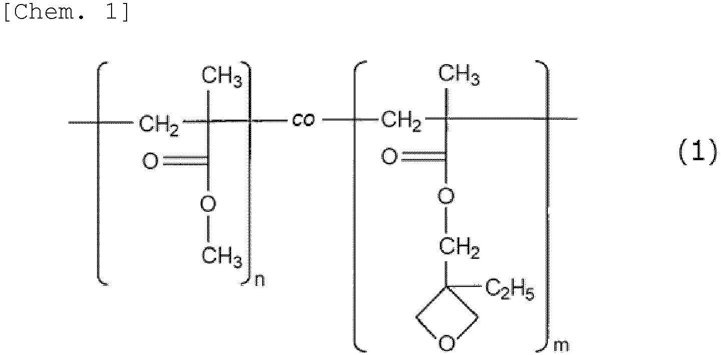
wherein in formula (1), m and n are each a number of 1 or greater, and m/n satisfies 0.12 or more and 0.33 or less,
a content of the copolymer is 0.5 to 2.5 mass% relative to a total amount of the supporting salt, the aprotic solvent, and the copolymer, and
a content of the vinylene carbonate is 0.5 to 2.5 mass% relative to the total amount of the supporting salt, the aprotic solvent, and the copolymer.

2. A lithium ion secondary battery comprising:
a positive electrode;
a negative electrode; and
a nonaqueous electrolyte obtained by cross-linking the copolymer using the nonaqueous electrolytic solution according to Claim 1.

3. The lithium ion secondary battery according to Claim 2, wherein the positive electrode includes, as a positive electrode active material, a lithium-containing composite oxide containing Ni, Co, and Mn, and an amount of Ni in the lithium-containing composite oxide is 50 mol% or more relative to a total amount of Ni, Co, and Mn.

4. The lithium ion secondary battery according to Claim 2 or 3, wherein the lithium ion secondary battery is a laminate-type lithium ion secondary battery including an outer casing formed of a laminate film.
